# EUROPEAN PATENT SPECIFICATION

(11) **EP 0 759 445 B1**
(45) Date of publication and mention of the grant of the patent: **17.03.1999**
(21) Application number: 96113252.9
(22) Date of filing: 19.08.1996
(51) Int. Cl.: C08F 10/00, C08F 4/649

(54) **Catalyst for olefin polymerization and method for producing olefin polymers using the same**
Katalysator für die Olefinpolymerisation und Verfahren zur Herstellung von Olefinpolymeren unter Verwendung desselben
Catalyseur pour la polymérisation d'oléfine et procédé de préparation de polymères d'oléfine utilisant celui-ci

(30) Priority: 17.08.1995 JP 209717/95; 17.08.1995 JP 209747/95; 02.08.1996 JP 204818/96; 02.08.1996 JP 204918/96
(43) Date of publication of application: 26.02.1997
(73) Proprietor: MITSUBISHI CHEMICAL CORPORATION, Chiyoda-ku, Tokyo-to (JP)
(72) Inventor: Sakurai, Hideo, 1, Toho-cho, Yokkaichi-Shi, Mie-ken (JP); Yamamoto, Yoshiharu, 1, Toho-cho, Yokkaichi-Shi, Mie-ken (JP)
(74) Representative: Hansen, Bernd, Dr. Dipl.-Chem.

(56) References cited:
- EP-A- 0 273 693
- US-A- 4 634 687
- US-A- 5 192 729
- DATABASE WPI Derwent Publications Ltd., London, GB; AN 93-261676 XP002018669 & JP-A-05 178 925 (MITSUBISHI) , 20 July 1993

## Description

### BACKGROUND OF THE INVENTION

### Field of the Invention

The present invention relates to a catalyst for olefin polymerization, and a method for producing olefin polymers using the same. More particularly, the present invention relates to a catalyst for olefin polymerization, with which a polymer, in particular, a polymer of an olefin of 3 or more carbon atoms, being excellent in moldability and processability, having extremely high stereoregularity can be produced in high yield, and to a method for producing olefin polymers using the catalyst.

### Related Art

In recent years, there have been made a large number of proposals in which solid components comprising as essential components titanium, magnesium and halogen are used to produce highly-stereoregular propylene polymers in high yield (see, for instance, Japanese Laid-Open Patent Publications Nos. 63310/1982, 63311/1982, 63312/1982, 138706/1983, 138711/1983 and 138705/1983).

However, as far as we know, those polymers which are produced by the use of such a catalytic system are still insufficient in stereoregularity. In addition, these polymers have narrow molecular-weight distribution, so that they are poor in moldability and processability. For this reason, it has been demanded to further improve the above catalytic system.

### SUMMARY OF THE INVENTION

An object of the present invention is to provide propylene polymers having not only excellent moldability and processability but also extremely high stereoregularity by the use of a polymerization catalyst which comprises, in addition to a specific solid catalyst component and an organoaluminum compound component, a specific sulfonic ester serving as an external donor in combination.

A catalyst for olefin polymerization according to the present invention in another aspect thereof, Aspect I, comprises the following components (A), (B), (C) and (D) in combination:
Component (A) which is a solid catalyst component comprising as essential components titanium, magnesium, a halogen and an electron-donating compound;
Component (B) which is an organoaluminum compound;
Component (C) which is a sulfonic ester represented by the formula R⁴SO₃R⁵, in which R⁴ and R⁵ resprctively represent a hydrocarbon group; and
Component (D) which is an organosilicon compund.

A catalyst for olefin polymerization according to the present invention in still another aspect thereof, Aspect II, comprises the following components (A), (B) and (C) in combination:
Component (A) which is a solid catalyst component comprising as essential components titanium, magnesium, a halogen and an electron-donating compound, the electron-donating compound being an organosilicon compound represented by the formula (I):

   R¹R² ₃₋ₙSi(OR³)ₙ (I)

   wherein R¹ is a branched or alicyclic hydrocarbon group, R² is a branched, alicyclic or linear hydrocarbon group, R³ is a branched or linear hydrocarbon group, respectively; and n is a number of 2 to 3;
Component (B) which is an organoaluminum compound; and
Component (C) which is a sulfonic ester represented by the formula R⁴SO₃R⁵, in which R⁴ and R⁵ respectively represent a hydrocarbon group.

Further, a method for producing olefin polymers according to the present invention comprises bringing an olefin into contact with the above-described catalyst for olefin polymerization to polymerize the olefin.

According to the present invention, olefin polymers having excellent moldability and processability, and extremely high crystallinity can be produced in high yield. These olefin polymers can be suitably used for automobile parts, household appliance parts, packaging materials and the like which are required to have higher rigidity.

### DETAILED DESCRIPTION OF THE PREFERRED EMBODIMENT

### [Catalyst for Olefin Polymerization]

A catalyst for olefin polymerization according to the present invention comprises specific components (A), (B), (C) and optionally (D) in combination. It is noted that the expression "comprises in combination" as used herein is open-ended in terms of "comprise" as conventionally used and not only means a catalyst containing solely the mentioned components (i.e., the components (A), (B), (C) and optionally (D)) in combination, but also does not exclude a catalyst containing other components in addition to the mentioned components in such a limit that the effects of the present invention are not impaired.

### <Component (A)>

The Component (A) is a solid catalyst component comprising as essential components titanium, magnesium, a halogen and an electron-donating compound.

The expression "comprising as essential components" as used herein is again open-ended in terms of "comprise" and indicates that the Component (A) can contain, in addition to the above-mentioned four or three components, other components or elements which are suitable for the purposes, and that all the components can be present in the state of being combined with each other.

Preferable examples of a magnesium compound which can be the source of magnesium for use in the present invention include magnesium halides, dialkoxymagnesiums, alkoxymagnesium halides, magnesium oxy halides, dialkylmagnesiums, magnesium oxide, magnesium hydroxide and carboxylates of magnesium. Of these, magnesium halides are preferred. As the alkyl or alkoxy in these compounds, those containing 1 to 6 carbon atoms, in particular, ethyl and butyl are preferred.

Examples of a titanium compound which can be the source of titanium include those compounds which are represented by the formula Ti(OR')₄₋ₘXₘ, in which R' represents a hydrocarbon group, preferably one containing 1 to 10 carbon atoms, X represents a halogen, and m is a number of 0 to 4.

Specific examples of such a titanium compound include TiCl₄, TiBr₄, Ti(OC₂H₅)Cl₃, Ti(OC₂H₅)₂Cl₂, Ti(OC₂H₅)₃Cl, Ti(O-iC₃H₇)Cl₃, Ti(O-nC₄H₉)Cl₃, Ti(O-nC₄H₉)₂Cl₂, Ti(OC₂H₅)Br, Ti(OC₂H₅)(O-nC₄H₉)₂Cl, Ti(O-nC₄H₉)₃Cl, Ti(OC₆H₅)Cl₃, Ti(O-iC₄H₉)₂Cl₂, Ti(O-nC₅H₁₁)Cl₃, Ti(O-nC₆H₁₃)Cl₃, Ti(OC₂H₅)₄, Ti(O-nC₃H₇)₄, Ti(O-nC₄H₉)₄, Ti(O-iC₄H₉)₄, Ti(O-nC₆H₁₃)₄ and Ti(O-nC₈H₁₇)₄.

A complex compound of TiX'₄ (wherein X' represents a halogen) and an electron-donating compound (of which details will be described later) can also be used as the titanium compound. Specific examples of such a complex compound include TiCl₄·CH₃CO₂C₂H₅, TiCl₄·C₆H₅COCl and TiCl₄·C₆H₅CO₂C₂H₅. Of these titanium compounds, TiCl₄ and Ti(O-nC₄H₉)₄ are preferred.

The halogen is usually supplied from the above-described magnesium and/or titanium halogen compounds. However, in the case where a known halogenating agent such as a halide of an aluminum compound, or a silicon or phosphorus halide is co- employed, the halogen can also be supplied from such an agent. The halogen contained in the solid catalyst component, and, in general, X in the above-described compounds may be fluorine, chlorine, bromine, iodine, or a mixture thereof; chlorine is particularly preferred.

Examples of the electron-donating compound include (a) oxygen-containing electron donors such as alcohols, phenols, ethers, ketones, aldehydes, carboxylic acids, esters of an organic or inorganic acid, acid halides, acid amides and acid anhydrides, and (b) nitrogen-containing electron donors such as amines, nitriles and isocyanates. Of these, ethers, organic acid esters and organic acid halides are preferred.
Particularly preferable ones are organic acid esters and halides.

Ethers useful as the electron-donating compounds are mono-, di- or triethers, preferably mono- or diethers, particularly dinoethers, having 2 to 20, preferably 7 to 14 carbon atoms. Examples of such ethers include methyl ether, ethyl ether, isopropyl ether, butyl ether, amyl ether, tetrahydrofuran, anisole, diphenyl ether,
2,2-dimethyl-1,3-dimethoxypropane,
2,2-diisopropyl-1,3-dimethoxypropane,
2,2-diisobutyl-1,3-dimethoxypropane,
2-isopropyl-2-isobutyl-1,3-dimethoxypropane,
2-isopropyl-2-s-butyl-1,3-dimethoxypropane,
2-t-butyl-2-methyl-1,3-dimethoxypropane,
2-t-butyl-2-isopropyl-1,3-dimethoxypropane,
2,2-dicyclopentyl-1,3-dimethoxypropane,
2,2-dicyclohexyl-1,3-dimethoxypropane,
2,2-diphenyl-1,3-dimethoxypropane,
2,2-dimethyl-1,3-diethoxypropane and
2,2-diisobutyl-1,3-diethoxypropane.

The organic acid esters useful as the electron-donating compounds are aliphatic carboxylic esters, in particular, alkyl esters of an aliphatic mono- or dicarboxylic, preferably monocarboxylic acid, having approximately 2 to 20 carbon atoms, in which the alkyl has approximately 1 to 10 carbon atoms, for instance, ethyl acetate, ethylcellosolve acetate, phenyl acetate,
cyclohexyl acetate, ethyl propionate, methyl butyrate, methyl valerate, ethyl stearate, methyl chloroacetate, ethyl dichloroacetate, methyl methacrylate, ethyl crotonate and ethyl cyclohexylcarboxylate; and aromatic carboxylic esters, in particular, alkyl esters of an aromatic mono-or dicarboxylic acid having approximately 7 to 15 carbon atoms, in which the alkyl has approximately 1 to 10 carbon atoms, for instance, ethyl benzoate, methyl toluate, ethyl toluate, methyl anisate, diethyl phthalate, dibutyl phthalate, diheptyl phthalate and dibenzyl phthalate. Of these organic acid esters, phthalic esters are particularly preferred.

Examples of the organic acid halides useful as the electron-donating compounds include halides of the above-described aliphatic or aromatic carboxylic acids, for instance, aliphatic carboxylic acid chlorides such as acetyl chloride, and aromatic carboxylic acid chlorides such as benzoyl chloride, toluic acid chloride, anisic acid chloride, phthaloyl chloride and isophthaloyl chloride. Of these organic acid halides, phthaloyl chloride is particularly preferred.

In the present invention, it is preferable to use at least one compound selected from the group consisting of phthalic esters and phthaloyl chloride as the electron-donating compound which is one of the essential component in Component (A) in Aspect, and to use an organosilicon compound of a formula (I), which will be described in detail hereinlater, in combination with the phthalic esters and/or phthaloyl chloride in Aspect II.

In one embodiment of the present invention, Aspect II, the electron donating compound which is used during the preparation process of Component (A), namely used as an internal donor, is an organosilicon compound represented by the formula (I):

R¹R² ₃₋ₙSi(OR³)ₙ (I)

wherein R¹ is a branched or alicyclic hydrocarbon group, R² is a branched, alicyclic or linear hydrocarbon group, R³ is a branched or linear hydrocarbon group, respectively; and n is a number of 2 to 3.

Detailed description of the organosilicon compound of the formula (I) will be given hereinbelow in terms of the Component (D) in the Aspect I.

These electron-donating compounds can be used singly or in admixture of those within the sub-group or of those between the sub-groups, and preferably the organosilicon compound of the formula (I) can be used in admixture with an organic acid ester or an organic acid halide.

When admixtures are used, the components of the admixture can be used in separate steps so that the admixture desired will eventually be formed.

Each of the above components can be used for the solid catalyst component, Component (A), in any amount as long as the effects of the present invention can be obtained. However, the amounts are preferably in the following ranges.

The titanium compound is used in such an amount that the molar ratio of the titanium compound to the magnesium compound used will be preferably from 0.001 to 100, more preferably from 0.01 to 10. In the case where a compound is used as the source of halogen, this compound is used in such an amount that the molar ratio of this compound to the magnesium compound used will be preferably from 0.01 to 1000, more preferably from 0.1 to 100, irrespective of whether the titanium and/or magnesium compound contains halogen or not.

The electron-donating compound is used in such an amount that the molar ratio of this compound to the magnesium compound used will be preferably from 0.001 to 10, more preferably from 0.01 to 5.

The Component (A) is prepared by using the above-described components in the absence of oxygen by one of the following production processes, for example:
(a) A process in which a magnesium halide, an electron-donating compound and a titanium compound are brought into contact with each other.
(b) A process in which a magnesium halide, an electron-donating compound and a halogen-containing titanium compound are brought into contact with alumina or magnesia that has been treated with a phosphorus halide compound.
(c) A process in which a titanium and/or silicon halogen compound is brought into contact with a solid component obtained by bringing a magnesium halide, a titanium tetraalkoxide and a specific polymeric silicon compound into contact with each other, thereby obtaining a solid catalyst component, an electron-donating compound being brought into contact with the solid catalyst component during or after the preparation thereof.

As the polymeric silicon compound, a compound represented by the following formula is suitable: 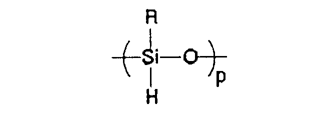 wherein R represents a hydrocarbon group having 1 to 10 carbon atoms, and p represents a polymerization degree at which the viscosity of the polymeric silicon compound is in the range of 1 to 100 centistokes (1 centistoke = 10⁻⁶ m².g⁻¹)

Specifically, methyl hydrogen polysiloxane, ethyl hydrogen polysiloxane, phenyl hydrogen polysiloxane, cyclohexyl hydrogen polysiloxane, 1,3,5,7-tetramethylcyclotetrasiloxane, 1,3,5,7,9-pentamethylcyclopentasiloxane or the like is preferable as the polymeric silicon compound.
(d) A process in which a magnesium compound is dissolved by a titanium tetraalkoxide and an electron-donating compound, a solid component is separated out from this solution by using a halogenating agent or titanium halogen compound, and then a titanium compound is brought into contact with this solid component.
(e) A process in which after an organomagnesium compound such as a Grignard reagent is allowed to react with a halogenating or reducing agent or the like, an electron-donating compound and a titanium compound are brought into contact with this reaction product.
(f) A process in which a halogenating agent and/or titanium compound is brought into contact with an alkoxy-magnesium compound in the presence of an electron-donating compound.

In the above-described processes for preparing the Component (A), the processes (a) and (c) are preferred.

The Component (A) for use in the present invention may be either the above-obtained solid product as it is, or one obtained by subjecting the above-obtained solid product to a preliminary polymerization treatment which comprises bringing the solid product into contact with a small amount of an olefin in the presence or absence of an organoaluminum compound to polymerize the olefin.

In the case where the Component (A) is one obtained by subjecting the solid component to the preliminary polymerization, there is no particular limitation on the conditions for preliminary polymerization of an olefin to prepare the Component (A). However, the following conditions are generally preferred. The polymerization temperature is preferably from 0 to 80°C, more preferably from 10 to 60°C. With respect to the amount of an olefin to be polymerized, it is preferable that from 0.001 to 50 g, more preferably from 0.1 to 10 g of an olefin be allowed to polymerize per 1 g of the solid product. It is noted that the conditions for the preliminary polymerization are, in general, milder than those for the main polymerization; for instance, the polymerization temperature in the preliminary polymerization is usually lower than that in the main polymerization.

As the organoaluminum compound component which may upon necessity be used for the preliminary polymerization, those which are known as organoaluminum compounds is the Ziegler-type catalysts can be used.
Specifically, those compounds which will be shown later in the explanation of the Component (B), that is, the organoaluminum compound, can be used.

The organoaluminum component is used for the preliminary polymerization in such an amount that the molar ratio of Al to the titanium component of the solid Component (A), Al/Ti, will be preferably in the range of 1 to 20, more preferably in the range of 2 to 10.

Examples of the olefin used for the prepolymerization include ethylene, propylene, 1-butene, 1-hexene and 3-methyl-1- butene.

### <Component (B)>

The Component (B) is an organoaluminum compound. Specific examples of the organoaluminum compound suitable as the Component (B) include those compounds which are represented by the formula R⁶_{3-q}AlX_{q} or
R⁷₃₋ᵣAl(OR⁸)ᵣ, wherein R⁶ and R⁷, which may be the same or different, represent a hydrocarbon group having 1 to 20 carbon atoms or hydrogen atom, R⁸ represents a hydrocarbon group having 1 to 4 carbon atoms, X is a halogen, q is a number of 0 or more and less than 3, and r is a number more than 0 and less than 3.

Specific examples of the Component (B) include (a) trialkylaluminums such as trimethylaluminum, triethylaluminum , triisobutylaluminum, trihexylaluminum, trioctylaluminum and tridecylaluminum; (b) alkylaluminum halides such as diethylaluminum monochloride, diisobutylaluminum monochloride, ethylaluminum sesquichloride and ethylaluminum dichloride; (c) dialkylaluminum hydrides such as diethylaluminum hydride and dibutylaluminum hydride; and (d) aluminum alkoxides such as diethylaluminum ethoxide and diethylaluminum phenoxide.

Besides these organoaluminum compounds (a) to (d), other organometallic compounds, for instance, those alkylaluminum alkoxides which are represented by the formula R⁹₃₋ₐAl(OR¹⁰)ₐ, in which a is a number of 1 to 3, and R⁹ and R¹⁰, which may be the same or different, are a hydrocarbon group having 1 to 20 carbon atoms, can be co-employed.

For instance, there can be mentioned the combination use of triethylaluminum and a diethylaluminum alkoxide, that of diethylaluminum monochloride and diethylaluminum ethoxide, that of ethylaluminum dichloride and diethylaluminum ethoxide, and that of triethylaluminum and diethylaluminum ethoxide and diethylaluminum monochloride.

The Component (B) is used in such an amount that the molar ratio of aluminum to the titanium component of the Component (A), Al/Ti, will be in the range of 1 to 1,000, preferably in the range of 10 to 500.

### <Component (C)>

The Component (C) is a sulfonic ester represented by the formula R⁴SO₃R⁵.

In the above formula, R⁴ and R⁵ are respectively a hydrocarbon group. R⁴, which constitutes the sulfonic acid moiety of this sulfonic ester, is preferably an aromatic hydrocarbon group having 6 to 20 carbon atoms, an alicyclic hydrocarbon group having 5 to 15 carbon atoms, or a branched hydrocarbon group having 3 to 20 carbon atoms, more preferably an aromatic hydrocarbon group having 6 to 10 carbon atoms, an alicyclic hydrocarbon group having 5 to 10 carbon atoms, or a branched hydrocarbon group having 3 to 8 carbon atoms, particularly an aromatic hydrocarbon group having 6 to 10 carbon atoms. A preferable sulfonic acid is thus an aromatic sulfonic acid.

R⁵, which corresponds to the alcohol moiety of this sulfonic ester, is preferably an aromatic hydrocarbon group having 6 to 20 carbon atoms, or an aliphatic hydrocarbon group having 1 to 20 carbon atoms, more preferably a branched aliphatic hydrocarbon group having 3 to 20 carbon atoms or an alicyclic hydrocarbon group having 5 to 15 carbon atoms. In particular, R⁵ is preferably a branched aliphatic hydrocarbon group having 3 to 15 carbon atoms, which is branched at the carbon atom at the alpha-position, or an alicyclic hydrocarbon group having 5 to 10 carbon atoms, more preferably a branched aliphatic hydrocarbon group having 3 to 8 carbon atoms.

A preferable sulfonic ester is one in which R⁴ is the above-described aromatic hydrocarbon group, and, at the same time, R⁵ is the above-described branched aliphatic or alicyclic hydrocarbon group.

The following compounds can be specifically mentioned.

Examples of the aromatic sulfonic ester include:
methyl benzenesulfonate,
ethyl benzenesulfonate,
butyl benzenesulfonate,
hexyl benzenesulfonate,
cyclohexyl benzenesulfonate,
phenyl benzenesulfonate,
methyl p-toluenesulfonate,
ethyl p-toluenesulfonate,
propyl P-toluenesulfonate,
butyl p-toluenesulfonate,
hexyl p-toluenesulfonate,
cyclohexyl p-toluenesulfonate,
phenyl p-toluenesulfonate,
methyl p-ethylbenzenesulfonate,
ethyl p-ethylbenzenesulfonate,
butyl p-ethylbenzenesulfonate,
hexyl p-ethylbenzenesulfonate,
cyclohexyl p-ethylbenzenesulfonate,
phenyl p-ethylbenzenesulfonate,
methyl p-t-butylbenzenesulfonate,
ethyl p-t-butylbenzenesulfonate,
butyl p-t-butylbenzenesulfonate,
hexyl p-t-butylbenzenesulfonate,
cyclohexyl p-t-butylbenzenesulfonate,
phenyl p-t-butylbenzenesulfonate,
methyl m-toluenesulfonate,
ethyl m-toluenesulfonate,
butyl m-toluenesulfonate,
hexyl m-toluenesulfonate,
cyclohexyl m-toluenesulfonate,
phenyl m-toluenesulfonate,
methyl m-ethylbenzenesulfonate,
ethyl m-ethylbenzenesulfonate,
butyl m-ethylbenzenesulfonate,
hexyl m-ethylbenzenesulfonate,
cyclohexyl m-ethylbenzenesulfonate,
phenyl m-ethylbenzenesulfonate,
methyl m-t-butylbenzenesulfonate,
methyl m-t-butyl-benzenesulfonate,
ethyl m-t-butylbenzenesulfonate,
butyl m-t-butylbenzenesulfonate,
hexyl m-t-butylbenzenesulfonate,
cyclohexyl m-t-butylbenzenesulfonate,
phenyl m-t-butylbenzenesulfonate,
isopropyl benzenesulfonate,
isobutyl benzenesulfonate,
sec-butyl benzenesulfonate,
tert-butyl benzenesulfonate,
tert-amyl benzenesulfonate,
2-ethylhexyl benzenesulfonate,
isopropyl p-toluenesulfonate,
isobutyl p-toluenesulfonate,
sec-butyl p-toluenesulfonate,
tert-butyl p-toluenesulfonate,
tert-amyl p-toluenesulfonate,
2-ethylhexyl p-toluenesulfonate,
isopropyl p-ethylbenzenesulfonate,
isobutyl p-ethylbenzenesulfonate,
sec-butyl p-ethylbenzenesulfonate,
tert-butyl p-ethylbenzenesulfonate,
tert-amyl p-ethylbenzenesulfonate,
2-ethylhexyl p-ethylbenzenesulfonate,
isopropyl p-tert-butylbenzenesulfonate,
isobutyl p-tert-butylbenzenesulfonate,
sec-butyl p-tert-butylbenzenesulfonate,
tert-butyl p-tert-butylbenzenesulfonate,
tert-amyl p-tert-butylbenzenesulfonate,
2-ethylhexyl p-tert-butylbenzenesulfonate,
isopropyl m-toluenesulfonate,
isobutyl m-toluenesulfonate,
sec-butyl m-toluenesulfonate,
tert-butyl m-toluenesulfonate,
tert-amyl m-toluenesulfonate,
2-ethylhexyl m-toluenesulfonate,
isopropyl m-ethylbenzenesulfonate,
isobutyl m-ethylbenzenesulfonate,
sec-butyl m-ethylbenzenesulfonate,
tert-butyl m-ethylbenzenesulfonate,
tert-amyl m-ethylbenzenesulfonate,
2-ethylhexyl m-ethylbenzenesulfonate,
isopropyl m-tert-butylbenzenesulfonate,
isobutyl m-tert-butylbenzenesulfonate,
sec-butyl m-tert-butylbenzenesulfonate,
tert-butyl m-tert-butylbenzenesulfonate,
tert-amyl m-tert-butylbenzenesulfonate, and
2-ethylhexyl m-tert-butylbenzenesulfonate.

Examples of the aliphatic sulfonic ester include: methyl cyclohexylsulfonate,
ethyl cyclohexylsulfonate,
butyl cyclohexylsulfonate,
hexyl cyclohexylsulfonate,
cyclohexyl cyclohexylsulfonate,
phenyl cyclohexylsulfonate,
methyl cyclopentylsulfonate,
ethyl cyclopentylsulfonate,
butyl cyclopentylsulfonate,
hexyl cyclopentylsulfonate,
cyclohexyl cyclopentylsulfonate,
phenyl cyclopentylsulfonate,
methyl isobutylsulfonate,
ethyl isobutylsulfonate,
butyl isobutylsulfonate,
hexyl isobutylsulfonate,
cyclohexyl isobutylsulfonate,
phenyl isobutylsulfonate,
methyl t-butylsulfonate,
ethyl t-butylsulfonate,
butyl t-butylsulfonate,
hexyl t-butylsulfonate,
cyclohexyl t-butylsulfonate,
phenyl t-butylsulfonate,
methyl t-amylsulfonate,
ethyl t-amylsulfonate,
butyl t-amylsulfonate,
hexyl t-amylsulfonate,
cyclohexyl t-amylsulfonate,
phenyl t-amylsulfonate,
isopropyl cyclohexylsulfonate,
isobutyl cyclohexylsulfonate,
sec-butyl cyclohexylsulfonate,
tert-butyl cyclohexylsulfonate,
tert-amyl cyclohexylsulfonate,
2-ethylhexyl cyclohexylsulfonate,
isopropyl cyclopentylsulfonate,
isobutyl cyclopentylsulfonate,
sec-butyl cyclopentylsulfonate,
tert-butyl cyclopentylsulfonate,
tert-amyl cyclopentylsulfonate,
2-ethylhexyl cyclopentylsulfonate,
isopropyl isobutylsulfonate,
isobutyl isobutylsulfonate,
sec-butyl isobutylsulfonate,
tert-butyl isobutylsulfonate,
tert-amyl isobutylsulfonate,
2-ethylhexyl isobutylsulfonate,
isopropyl tert-butylsulfonate,
isobutyl tert-butylsulfonate,
sec-butyl tert-butylsulfonate,
tert-butyl tert-butylsulfonate,
tert-amyl tert-butylsulfonate,
2-ethylhexyl tert-butylsulfonate,
isopropyl tert-amylsulfonate,
isobutyl tert-amylsulfonate,
sec-butyl tert-amylsulfonate,
tert-butyl tert-amylsulfonate,
tert-amyl tert-amylsulfonate and
2-ethylhexyl tert-amylsulfonate.

### <Component (D)〉

The Component (D) is an optional component in the Aspect II but is an essential component in the Aspect I in the present invention, and is an organosilicon compound. Compounds containing Si-O-C bond are generally used, and typically used are those compounds which are represented by the formula (I):

R¹R² ₃₋ₙSi(OR³)ₙ (I)

wherein R¹ is a branched or alicyclic hydrocarbon group preferably a branched hydrocarbon group having 3 to 12 carbon atoms, with an alpha-carbon which is secondary or tertiary, or an alicyclic hydrocarbon group having 5 to 12 carbon atoms, more preferably a branched hydrocarbon group having 4 to 10 carbon atoms with an alpha-carbon which is tertiary, or an alicyclic hydrocarbon group having 5 to 7 carbon atoms; R² is a branched, alicyclic or linear hydrocarbon having 1 to 12 carbon atoms; R³ is a linear or branched hydrocarbon group having 1 to 8, preferably 1 to 4 carbon atoms; respectively; and n is a number of 2 to 3.

Furthermore, the organosilicon compound of a formula (I) is, when it is used within Component (A) thus as an inside donor, more preferably the one where R¹ is a branched hydrocarbon group having 4 to 10 carbon atoms with an alpha-carbon which is tertiary, and is, when it is used as Component (B) in the polymerization thus as an outside donor, more preferably the one where R¹ is a branched or alicyclic hydrocarbon group.

Specific examples of this silicon compound include the following compounds:
(CH₃)₃CSi(CH₃)(OCH₃)₂, (CH₃)₃CSi(CH(CH₃)₂)(OCH₃)₂,(CH₃)₃CSi(CH₃)(OC₂H₅)₂, (C₂H₅)₃CSi(CH₃)(OCH₃)₂, (CH₃)(C₂H₅)CHSi(CH₃)(OCH₃)₂, ((CH₃)₂CHCH₂)₂Si(OCH₃)₂, (CH₃)₃CSi(OCH₃)₃, (CH₃)₃CSi(OC₂H₅)₃, (C₂H₅)₃CSi(OCH₃)₃, (CH₃)(C₂H₅)CHSi(OCH₃)₃, (C₂H₅)(CH₃)₂CSi(OC₂H₅)₃,

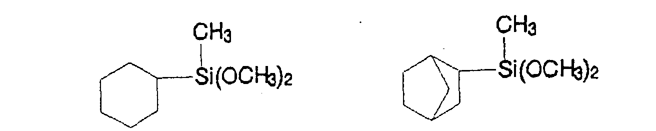

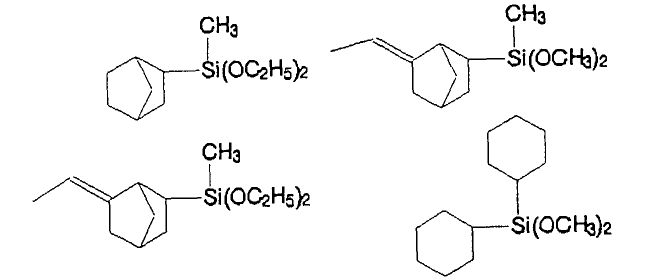

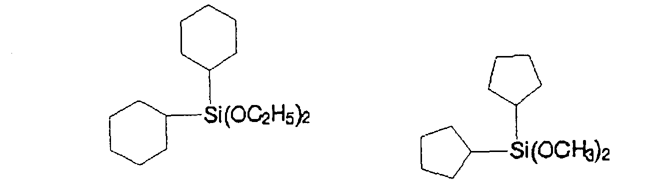

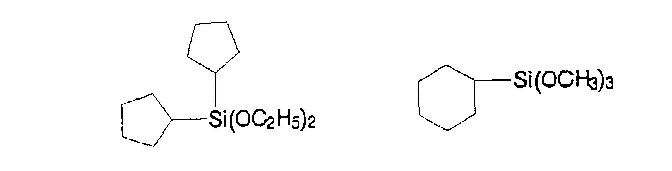

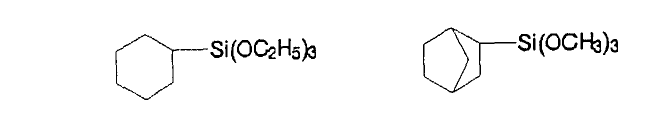

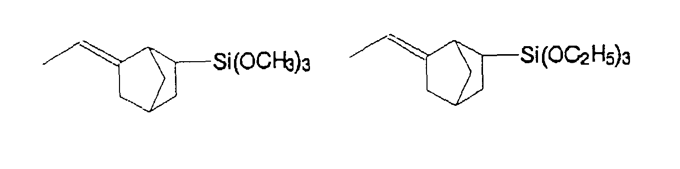

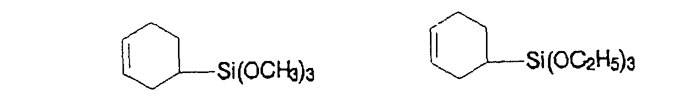

The amount of the Component (C) and that of the Component (D) when used can be selected from a wide range. However, the molar ratio of the Component (C) or (D) to the Component (B), the organoaluminum compound, is generally in the range of 0.01 to 1.0, preferably in the range of 0.05 to 0.5.

The Component (C), the sulfonate, is an external donor, and can be used simply as a polymerization additive, that is, as a typical external donor, but it is preferable to use the Component (C) after it being brought into contact with and mixed with the Component (B). In this case, the Component (C) can be mixed, in advance, with the whole amount of the Component (B) to be used for polymerization. Alternatively, the Component (C) is mixed with a part of the Component (B) to be used in advance, and the mixture is added to the polymerization system. Thus, it is to be understood that, in the present invention, the use of the Component (C) other than that where the Component (C) is added during the preparation process of the Component (A) so as to incorporate it into the Component (A) is regarded as the use as an external donor.

The components (C) and (D) can be used not only for main polymerization but also for preliminaly polymerization.

### [Use of Catalyst/Polymerization]

### <Polymerization>

The catalyst system of the present invention is, of course, used for conventional slurry polymerization. It can also be used for liquid phase solvent-free polymerization using substantially no solvent, solution polymerization, and gas phase polymerization.

In the case of slurry polymerization, a hydrocarbon solvent such as hexane, heptane or pentane can be used as the polymerization medium.

The polymerization temperature is preferably from 30 to 200°C, more preferably from 50 to 150°C, particularly from 60 to 100°C. It is also possible to additionally use hydrogen as a molecular-weight modifier.

### <Olefin>

Olefins to be polymerized by the use of the catalyst system of the present invention are alpha-olefins having 2 to 12, preferably 2 to 10 carbon atoms; for example, linear olefins such as ethylene, propylene, 1-butene, 1-pentene, 1-hexene and 1-octene, and branched alpha-olefins such as 4-methyl-1-pentene and 3-methyl-1-butene. The catalyst of the present invention is particularly suitable for the polymerization α-olefins having 3 or mroe carbon atoms, especially of propylene. However, the catalyst is also suitably used for the random or block copolymerization of propylene with ethylene or 1-butene.

### EXAMPLES

The present invention will now be explained more specifically by referring to the following examples. However, these examples are not intended to limit or restrict the present invention in any way.

### Example I-1

### [Preparation of Component (A)]

To a flask thoroughly purged with nitrogen was introduced 200 ml of n-heptane which had been subjected to dehydration and deoxygenation. To this were then introduced 0.4 mol of MgCl₂ and 0.8 mol of Ti(O-nC₄H₉)₄, and they were allowed to react with each other at 95°C for 2 hours. After the reaction, the reaction mixture was cooled to 40°C. Subsequently, 48 ml of methyl hydrogen polysiloxane having a viscosity of 20 centistokes was introduced to the reaction mixture to cause a reaction. The reaction was carried out for 3 hours. The solid product produced was washed with n-heptane.

Subsequently, 50 ml of purified n-heptane was introduced to a flask which had been thoroughly purged with nitrogen. To this was added the above-synthesized solid product in an amount of 0.24 mol calculated in terms of Mg atom. A mixture of 25 ml of n-heptane and 0.4 mol of SiCl₄ was then introduced to the flask over 60 minutes, with the content of the flask being kept at 30°C. The reaction was carried out at 90°C for 3 hours.

A mixture of 25 ml of n-heptane and 0.02 mol of phthalic acid chloride was further introduced to the flask over 30 minutes, with the content of the flask being kept at 90°C. The reaction was carried out at 90°C for one hour.

After the reaction, the solid product was washed with n-heptane. 0.24 mmol of SiCl₄ was then added to and allowed to react with the solid product. The reaction was carried out at 100°C for 3 hours. After the reaction, the reaction product was thoroughly washed with n-heptane. The solid product thus obtained was one based on magnesium chloride, and the Ti content thereof was 2.3% by weight.

### [Polymerization of Propylene]

To a 3 litre stainless steel-made autoclave equipped with a stirrer were introduced 1.5 litre of thoroughly-purified n-heptane, 108 mg of t-butylmethyldimethoxysilane, and a mixture of 380 mg of triethylaluminum and 150 mg of butyl p-toluenesulfonate. 20 mg of the above-obtained solid product as the solid catalyst Component (A) was further introduced to the flask, to which 500 ml of hydrogen was then introduced.

Subsequently, the temperature of the autoclave was raised to 65°C, and propylene was supplied to the autoclave under pressure until the internal pressure of the autoclave reached 7 kg/cm² (1 kg/cm² = 0.981 bar), thereby initiating the polymerization of propylene. The polymerization was continued for 3 hours under this pressure maintained.

Thereafter, the introduction of the monomer was stopped, and the unreacted monomer was purged. The polymer produced was separated from the heptane by filtration, and dried. As a result, 491 g of powdery polypropylene was obtained. When the n-heptane was removed from the filtrate by heating, a further crop of 0.82 g of a polymer was obtained. Therefore, the catalyst efficiency of the catalytic system of the present invention was 24,600 g-polypropylene/g-solid catalyst (g-PP/g-CAT). The melt flow rate (MFR) and bulk density of the polymer produced were 5.5 g/10 min and 0.51 g/cm³, respectively. The Q value determined by means of GPC was 5.1, and the density of the pressed sheet made from this polymer was 0.9097 g/cm³. The Olsen flexural modulus was measured in accordance with ASTM D-747-70. As a result, it was 15,300 kg/cm².

### Comparative Example I-1

The procedure of Example I-1 was repeated except that the butyl p-toluenesulfonate was not used, thereby carrying out the polymerization of propylene. The results obtained are as shown in Table I-1.

### Example I-2

The procedure of Example I-1 was repeated except that the butyl p-toluenesulfonate and the triethylaluminum were separately added to the polymerization vessel instead of mixing them in advance as in Example I-1, thereby carrying out the polymerization of propylene. The results obtained are as shown in Table I-1.

### Comparative Examples I-2 and I-3

The procedure of Example I-2 was repeated except that the compound shown in Table I-1 was used as the Component (C) instead of the butyl p-toluenesulfonate, thereby carrying out the polymerization of propylene. The results obtained are as shown in Table I-1.

### Examples I-3 and I-4

The procedure of Example I-1 was repeated except that the compound shown in Table I-1 was used as the Component (C) instead of the butyl p-toluenesulfonate, thereby carrying out the polymerization of propylene. The results obtained are as shown in Table I-1.

### Example I-5

### [Production of Propylene Block Copolymer]

A 200 litre stirring-type autoclave was thoroughly purged with propylene. Thereafter, 50 litre of purified n-heptane and 3.0 g of t-butylmethyldimethoxysilane were introduced to the autoclave, to which a mixture of 10.5 g of triethylaluminum and 4.2 g of butyl p-toluenesulfonate was then introduced. 8.7 g of the solid catalyst component prepared in Example I-1 was further added to the above mixture at a temperature of 60°C under propylene atmosphere.

After the temperature of the autoclave was raised to 65°C, propylene was introduced to the autoclave at a feed rate of 9.0 kg/hour, with the concentration of hydrogen being kept at 2.5 vol%, whereby a first-step polymerization was initiated.

After 231 minutes, the introduction of propylene was stopped. The internal pressure of the autoclave at this time was 5.8 kg/cm²G (1 kg/cm²G = 0.981 bar Gauge). The polymerization was continued at 65°C for a further 90 minutes. Thereafter, the propylene in the gas phase was purged until the pressure of the autoclave became 0.2 kg/cm²G.

Next, after the temperature of the autoclave was lowered to 60°C, propylene and ethylene were introduced to the autoclave at feed rates of 3.78 kg/hour and 2.52 kg/hour, respectively, for a period of 31 minutes to continue polymerization, thereby carrying out a second-step polymerization. The second-step polymerization was continued for further 30 minutes. The slurry obtained was filtered, and the product separated was dried. 33.4 kg of a powdery block copolymer was thus obtained.

The results obtained are as shown in detail in Table I-2. In this table, the ratio of the weight of the polymer produced by the first-step polymerization to that of the polymer produced by the second-step polymerization, and the ratio of the weight of propylene to that of ethylene in the second-step polymerization are the values obtained by feed-base calculation.

### Comparative Example I-4

The procedure of Example I-5 was repeated except that the butyl p-toluenesulfonate was not used, thereby producing a block copolymer. As a result, the internal pressure of the autoclave at the time when the feeding of propylene for carrying out the first-step polymerization was stopped was 5.8 kg/cm²G, and 32.2 kg of a powdery block copolymer was obtained. The results obtained are as shown in detail in Table I-2.

### Comparative Example I-5

The procedure of Example I-1 was repeated except that the electron donor (phthalic acid chloride) was not used for the preparation of the Component (A), thereby polymerizing propylene. The results obtained are as shown in Table I-1.

### Example I-6

The procedure of Example I-1 was repeated except that the butyl p-toluenesulfonate was replaced by sec-butyl p-toluene-sulfonate, thereby carrying out the experiment. As a result, 510 g of powdery polypropylene was obtained. When the n-heptane was removed from the filtrate by heating, a further crop of 0.71 g of a polymer was obtained. Therefore, the catalyst efficiency of the catalytic system of the invention was 25,500g-polypropylene/g-solid catalyst (g-PP/g-CAT). The melt flow rate (MFR) and bulk density of the polymer produced were 5.7 g/10 min and 0.51 g/cm³, respectively. The Q value determined by means of GPC was 5.1, and the density of the pressed sheet made from this polymer was 0.9100 g/cm³. The Olsen flexural modulus was determined in accordance with ASTM D-747-70. As a result, it was 15,500 kg/cm².

### Example I-7

The procedure of Example I-6 was repeated except that the sec-butyl p-toluenesulfonate and the triethylaluminum were separately introduced to the polymerization vessel instead of mixing them in advance as in Example I-6, thereby carrying out the polymerization of propylene. The results obtained are as shown in Table I-3.

### Examples I-8 and I-9

The procedure of Example I-6 was repeated except that the compound shown in Table I-3 was used as the Component (C) instead of the sec-butyl p-toluenesulfonate, thereby carrying out the polymerization of propylene. The results obtained are as shown in Table I-3.

### Example I-10

### [Production of Propylene Block Copolymer]

A 200 litre stirring-type autoclave was thoroughly purged with propylene. Thereafter, 50 litre of purified n-heptane and 3.0 g of t-butylmethyldimethoxysilane were introduced to the autoclave, to which a mixture of 10.5 g of triethylaluminum and 4.2 g of sec-butyl p-toluenesulfonate was then introduced. 8.7 g of the solid catalyst component prepared in Example I-1 was further added to the above mixture at a temperature of 60°C under propylene atmosphere.

After the temperature of the autoclave was raised to 65°C, propylene was introduced to the autoclave at a feed rate of 9.0 kg/hour, with the concentration of hydrogen being kept at 2.5 vol%, whereby a first-step polymerization was initiated.

After 231 minutes, the introduction of propylene was stopped. The internal pressure of the autoclave at this time was 5.1 kg/cm²G. The polymerization was continued at 65°C for further 90 minutes. Thereafter, the propylene in the gas phase was purged until the pressure of the autoclave became 0.2 kg/cm²G.

Next, after the temperature of the autoclave was lowered to 60°C, propylene and ethylene were introduced to the autoclave at feed rates of 3.78 kg/hour and 2.52 kg/hour, respectively, for 31 minutes to continue polymerization, thereby carrying out a second-step polymerization. The second-step polymerization was continued for further 30 minutes. The slurry obtained was filtered, and the product separated was dried. 33.6 kg of a powdery block copolymer was thus obtained.

The results obtained are as shown in detail in Table I-2. In this table, the ratio of the weight of the polymer produced by the first-step polymerization to that of the polymer produced by the second-step polymerization, and the ratio of the weight of propylene to that of ethylene in the second-step polymerization are the values obtained by feed-base calculation.

### Comparative Example I-6

The procedure of Example I-6 was repeated except that the electron donor (phthalic acid chloride) was not used for the preparation of the Component (A), thereby polymerizing propylene. The results obtained are as shown in Table I-3.

### Examples I-11 to I-13

The procedure of Example I-1 was repeated except that the compound shown in Table I-4 was used, for the preparation of the Component (A), instead of the phthalic acid chloride in the same amount as that of the phthalic acid chloride used in Example I-1, thereby carrying out the experiment. The results obtained are as shown in Table I-4.

### Example I-14

### [Preparation of Component (A)]

To a flask thoroughly purged with nitrogen, 100 ml of toluene which had been subjected to dehydration and deoxygenation was introduced. To this was introduced 10 g of Mg(OEt)₂, thereby obtaining a slurry. Subsequently, 20 ml of TiCl₄ was introduced to the slurry, and the mixture was heated to 90°C. After 2.5 ml of di-n-butyl phthalate was introduced to the mixture, the temperature of the mixture was further raised to 110°C to cause a reaction. The reaction was continued for 3 hours. After the reaction, the reaction product was washed with toluene. To this were added 20 ml of TiCl₄ and 100 ml of toluene, and the reaction was carried out at 110°C for 2 hours. After the reaction, the reaction product was thoroughly washed with n-heptane to obtain a solid catalyst component, the Component (A). The titanium content of this product was 2.6% by weight.

### [Polymerization of Propylene]

The procedure of Example I-1 was repeated.

The results are as shown in Table I-1.

### <Methods for Evaluating Practical Properties>

The practical properties of the polymers obtained in Examples I-5 and I-10 and Comparative Example I-4 were evaluated as follows. The following additives were added to the powdery block copolymers obtained in Examples I-5 and I-10 and Comparative Example I-4, and the mixtures were respectively pelletized by an extruder under the same conditions. The resultants were respectively molded into sheets, each having a thickness of 4 mm, by an injection molding press. The sheets thus obtained were evaluated in terms of the following physical properties.

### Additives:

| | |
|---|---|
| 2,6-tert-butyl phenol | 0.10% by weight |
| "RA 1010" (manufactured by Ciba-Giegy, Ltd.) | 0.05% by weight |
| Calcium stearate | 0.10% by weight |

### Measurement of Physical Properties:

Physical properties were determined in accordance with the following test methods.
(a) Flexural modulus: ASTM-D790
(b) Izod impact strength (0°C): ASTM-D256 (notched)

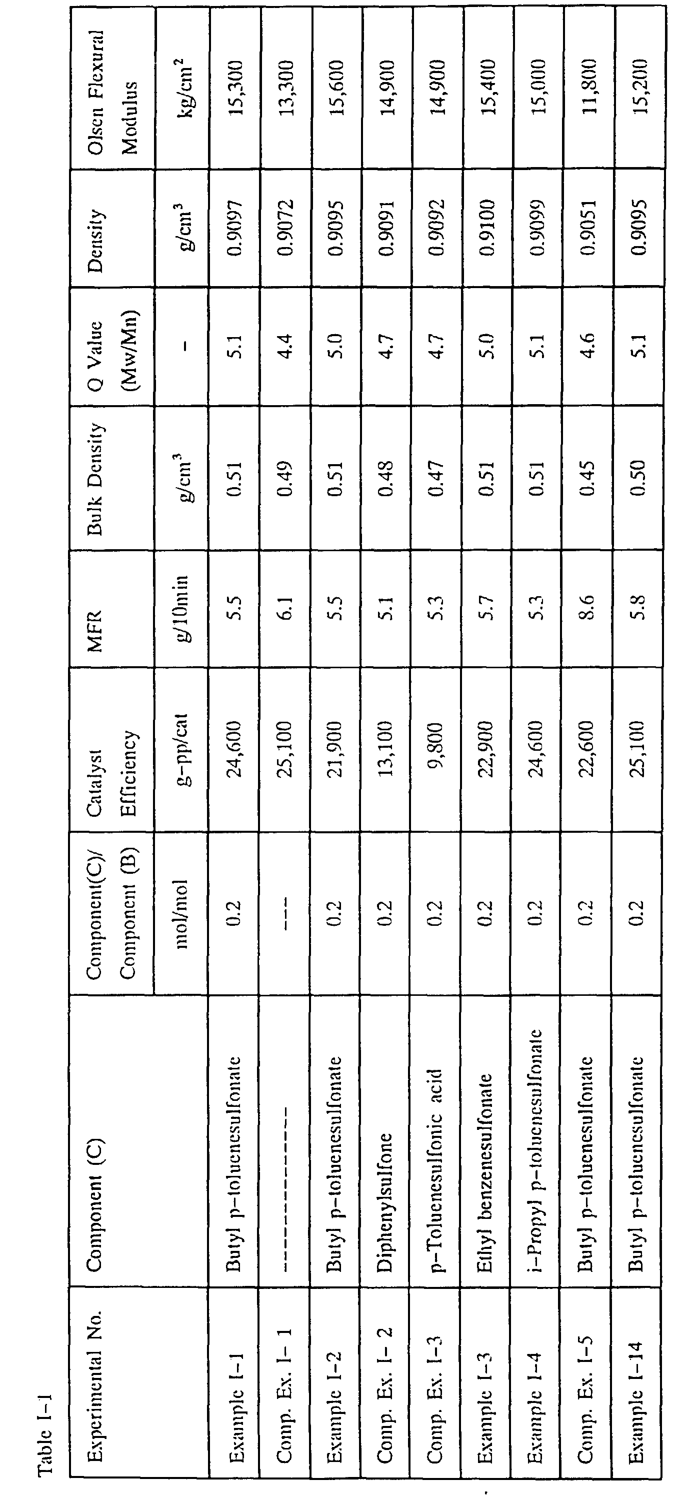

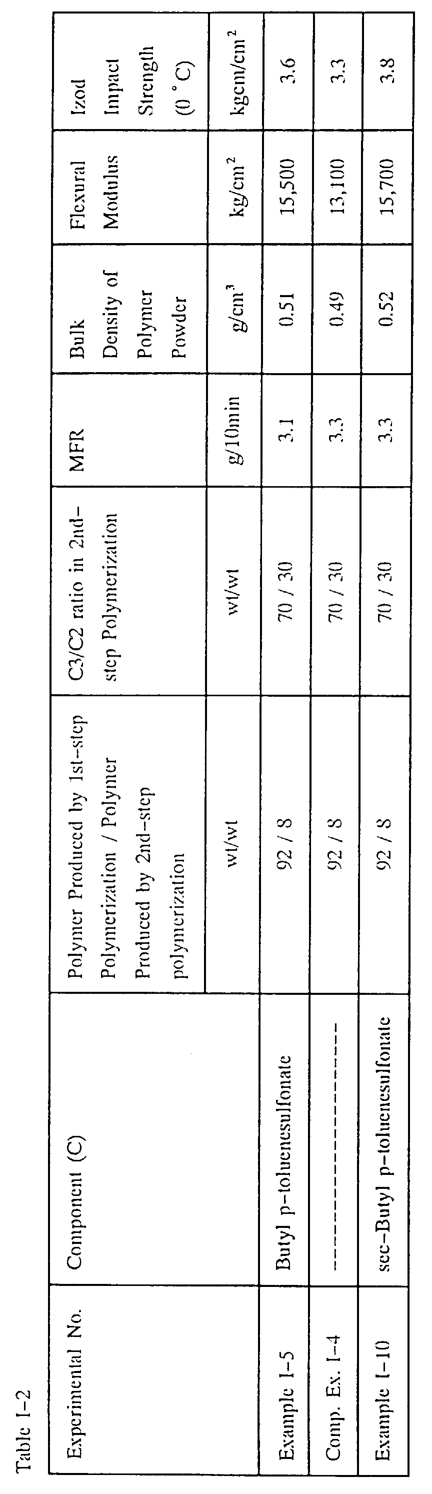

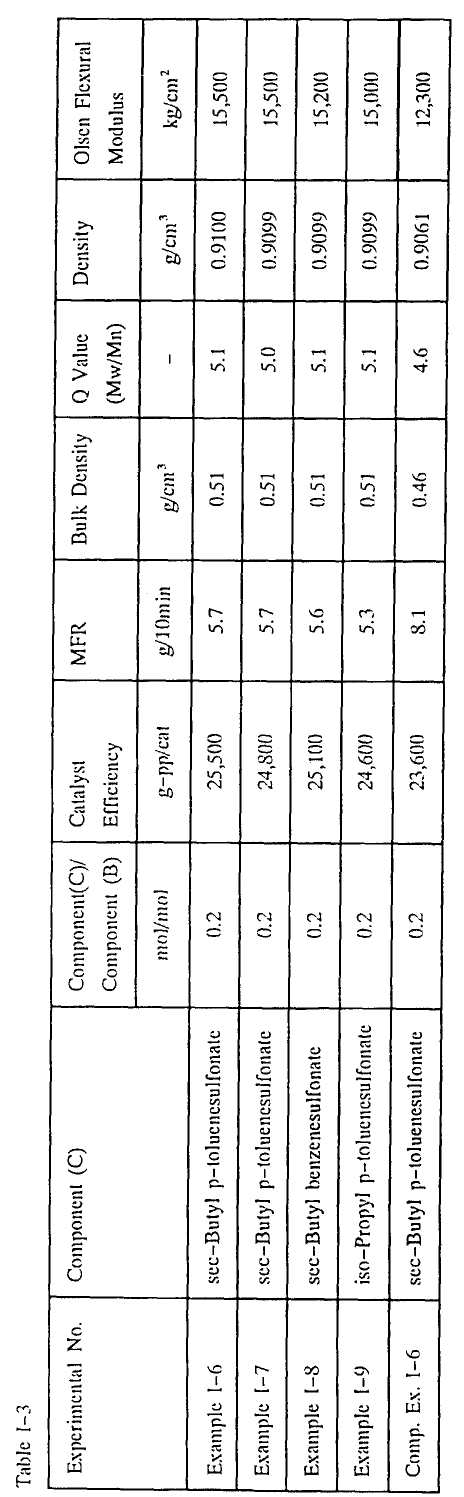

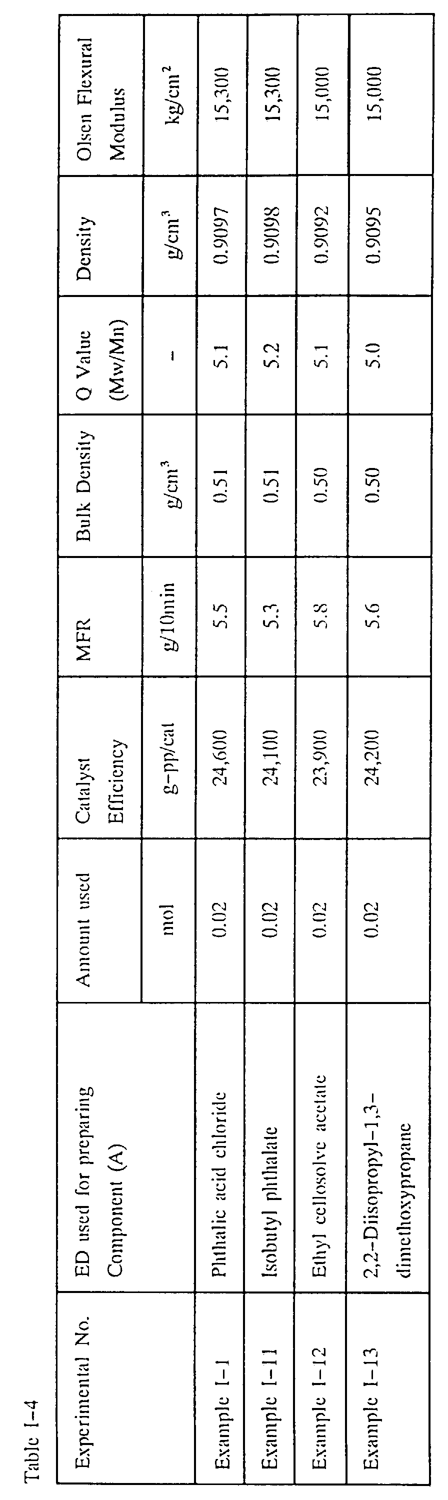

### Example II-1

### [Preparation of Component (A)]

To a flask thoroughly purged with nitrogen was introduced 200 ml of n-heptane which had been subjected to dehydration and deoxygenation. To this were then introduced 0.4 mol of MgCl₂ and 0.8 mol of Ti(O-nC₄H₉)₄, and they were allowed to react with each other at 95°C for 2 hours. After the reaction, the reaction mixture was cooled to 40°C. Subsequently, 48 ml of methyl hydrogen polysiloxane having a viscosity of 20 centistokes was introduced to the reaction mixture to cause a reaction. The reaction was carried out for 3 hours. The solid product produced was washed with n-heptane.

Subsequently, 50 ml of purified n-heptane was introduced to a flask which had been thoroughly purged with nitrogen. To this was added the above-synthesized solid product in an amount of 0.24 mol calculated in terms of Mg atom. A mixture of 25 ml of n-heptane and 0.4 mol of SiCl₄ was then introduced to the flask over 60 minutes, with the content of the flask being kept at 30°C. The reaction was carried out at 90°C for 3 hours.

A mixture of 25 ml of n-heptane and 0.02 mol of phthalic acid chloride was further introduced to the flask over 30 minutes, with the content of the flask being kept at 90°C. The reaction was carried out at 90°C for one hour.

After the reaction, the solid product was washed with n-heptane. 0.24 mmol of SiCl₄ was then added to and allowed to react with the solid product. The reaction was carried out at 100°C for 3 hours. After the reaction, the reaction product was thoroughly washed with n-heptane. To a flask thoroughly purged with nitrogen was added 50 ml of thoroughly purified n-heptane, followed by 5 g of the solid product prepared above and further 0.8 ml of (CH₃)₃CSi(CH₃)(OCH₃)₂, which were contacted at 30 °C for 2 hours. The solid product thus obtained was one based on magnesium chloride, and the Ti content thereof was 2.0% by weight.

### [Polymerization of Propylene]

To a 3 litre stainless steel-made autoclave equipped with a stirrer were introduced 1.5 litre of thoroughly-purified n-heptane, and a mixture of 380 mg of triethylaluminum and 150 mg of butyl p-toluenesulfonate. 20 mg of the above-obtained solid product as the solid catalyst Component (A) was further introduced to the flask, to which 500 ml of hydrogen was then introduced.

Subsequently, the temperature of the autoclave was raised to 65°C, and propylene was supplied to the autoclave under pressure until the internal pressure of the autoclave reached 7 kg/cm², thereby initiating the polymerization of propylene. The polymerization was continued for 3 hours under this pressure maintained.

Thereafter, the introduction of the monomer was stopped, and the unreacted monomer was purged. The polymer produced was separated from the heptane by filtration, and dried. As a result, 468 g of powdery polypropylene was obtained. When the n-heptane was removed from the filtrate by heating, a further crop of 0.61 g of a polymer was obtained. Therefore, the catalyst efficiency of the catalytic system of the present invention was 23,400 g-polypropylene/g-solid catalyst (g-PP/g-CAT). The melt flow rate (MFR) and bulk density of the polymer produced were 5.3 g/10 min and 0.51 g/cm³, respectively. The Q value determined by means of GPC was 4.9, and the density of the pressed sheet made from this polymer was 0.9101 g/cm³. The Olsen flexural modulus was measured in accordance with ASTM D-747-70. As a result, it was 15,500 kg/cm².

### Comparative Example II-1

The procedure of Example II-1 was repeated except that the butyl p-toluenesulfonate was not used, thereby carrying out the polymerization of propylene. The results obtained are as shown in Table II-1.

### Example II-2

The procedure of Example II-1 was repeated except that the butyl p-toluenesulfonate and the triethylaluminum were separately added to the polymerization vessel instead of mixing them in advance as in Example II-1, thereby carrying out the polymerization of propylene. The results obtained are as shown in Table II-1.

### Comparative Examples II-2 and II-3

The procedure of Example II-2 was repeated except that the compound shown in Table II-1 was used as the Component (C) instead of the butyl p-toluenesulfonate, thereby carrying out the polymerization of propylene. The results obtained are as shown in Table II-1.

### Examples II-3 and II-4

The procedure of Example II-1 was repeated except that the compound shown in Table II-1 was used as the Component (C) instead of the butyl p-toluenesulfonate, thereby carrying out the polymerization of propylene. The results obtained are as shown in Table II-1.

### Example II-5

### [Production of Propylene Block Copolymer]

A 200 litre stirring-type autoclave was thoroughly purged with propylene. Thereafter, 50 litre of purified n-heptane was introduced to the autoclave, to which a mixture of 10.5 g of triethylaluminum and 4.2 g of butyl p-toluenesulfonate was then introduced. 8.7 g of the solid catalyst component prepared in Example II-1 was further added to the above mixture at a temperature of 60°C under propylene atmosphere.

After the temperature of the autoclave was raised to 65°C, propylene was introduced to the autoclave at a feed rate of 9.0 kg/hour, with the concentration of hydrogen being kept at 2.5 vol%, whereby a first-step polymerization was initiated.

After 231 minutes, the introduction of propylene was stopped. The internal pressure of the autoclave at this time was 6.0 kg/cm²G. The polymerization was continued at 65°C for a further 90 minutes. Thereafter, the propylene in the gas phase was purged until the pressure of the autoclave became 0.2 kg/cm²G.

Next, after the temperature of the autoclave was lowered to 60°C, propylene and ethylene were introduced to the autoclave at feed rates of 3.78 kg/hour and 2.52 kg/hour, respectively, for a period of 31 minutes to continue polymerization, thereby carrying out a second-step polymerization. The second-step polymerization was continued for further 30 minutes. The slurry obtained was filtered, and the product separated was dried. 33.1 kg of a powdery block copolymer was thus obtained.

The results obtained are as shown in detail in Table II-2. In this table, the ratio of the weight of the polymer produced by the first-step polymerization to that of the polymer produced by the second-step polymerization, and the ratio of the weight of propylene to that of ethylene in the second-step polymerization are the values obtained by feed-base calculation.

### Comparative Example II-4

The procedure of Example II-5 was repeated except that the butyl p-toluenesulfonate was not used, thereby producing a block copolymer. As a result, the internal pressure of the autoclave at the time when the feeding of propylene for carrying out the first-step polymerization was stopped was 5.9 kg/cm²G, and 32.2 kg of a powdery block copolymer was obtained. The results obtained are as shown in detail in Table II-2.

### Example II-6

The procedure of Example II-1 was repeated except that the butyl p-toluenesulfonate was replaced by sec-butyl p-toluene-sulfonate, thereby carrying out the experiment. As a result, 502 g of powdery polypropylene was obtained. When the n-heptane was removed from the filtrate by heating, a further crop of 0.49 g of a polymer was obtained. Therefore, the catalyst efficiency of the catalytic system of the invention was 25,100g-polypropylene/g-solid catalyst (g-PP/g-CAT). The melt flow rate (MFR) and bulk density of the polymer produced were 5.7 g/10 min and 0.51 g/cm³, respectively. The Q value determined by means of GPC was 4.9, and the density of the pressed sheet made from this polymer was 0.9102 g/cm³. The Olsen flexural modulus was determined in accordance with ASTM D-747-70. As a result, it was 15,500 kg/cm².

### Example II-7

The procedure of Example II-6 was repeated except that the sec-butyl p-toluenesulfonate and the triethylaluminum were separately introduced to the polymerization vessel instead of mixing them in advance as in Example II-6, thereby carrying out the polymerization of propylene. The results obtained are as shown in Table II-3.

### Examples II-8 and II-9

The procedure of Example II-6 was repeated except that the compound shown in Table II-3 was used as the Component (C) instead of the sec-butyl p-toluenesulfonate, thereby carrying out the polymerization of propylene. The results obtained are as shown in Table II-3.

### Example II-10

### [Production of Propylene Block Copolymer]

A 200 litre stirring-type autoclave was thoroughly purged with propylene. Thereafter, 50 litre of purified n-heptane was introduced to the autoclave, to which a mixture of 10.5 g of triethylaluminum and 4.2 g of sec-butyl p-toluenesulfonate was then introduced. 8.7 g of the solid catalyst component prepared in Example II-1 was further added to the above mixture at a temperature of 60°C under propylene atmosphere.

After the temperature of the autoclave was raised to 65°C, propylene was introduced to the autoclave at a feed rate of 9.0 kg/hour, with the concentration of hydrogen being kept at 2.5 vol%, whereby a first-step polymerization was initiated.

After 231 minutes, the introduction of propylene was stopped. The internal pressure of the autoclave at this time was 5.4 kg/cm²G. The polymerization was continued at 65°C for further 90 minutes. Thereafter, the propylene in the gas phase was purged until the pressure of the autoclave became 0.2 kg/cm²G.

Next, after the temperature of the autoclave was lowered to 60°C, propylene and ethylene were introduced to the autoclave at feed rates of 3.78 kg/hour and 2.52 kg/hour, respectively, for 31 minutes to continue polymerization, thereby carrying out a second-step polymerization. The second-step polymerization was continued for further 30 minutes. The slurry obtained was filtered, and the product separated was dried. 33.3 kg of a powdery block copolymer was thus obtained.

The results obtained are as shown in detail in Table II-2. In this table, the ratio of the weight of the polymer produced by the first-step polymerization to that of the polymer produced by the second-step polymerization, and the ratio of the weight of propylene to that of ethylene in the second-step polymerization are the values obtained by feed-base calculation.

### Example II-11

### [preparation of Component (A)]

To a flask thoroughly purged with nitrogen was introduced 100 ml of toluene which had been dehydrated and deoxygenated. To this was introduced 10 g of Mg(OEt)₂ to form a suspension, followed by 20 ml of TiCl₄ and, after the temperature was raised to 90°C, by 2.5 ml of n-butyl phthalate. The temperature was raised to 110°C, and the reaction was conducted for 3 hours. After the reaction, the solid product was washed with toluene, followed by introduction of 20 ml of TiCl₄ and 100 ml of toluene. The reaction was conducted at 110°C for 2 hours. After the reaction, the solid product was thoroughly washed with n-heptane to form a solid product to prepare Component (A). The solid product thus formed was found to contain Ti in 2.6% by weight.

To a flask thoroughly purged with nitrogen was introduced 50 ml of n-heptane purified as above, followed by 5 g of the solid product formed as above, 1.2 ml of (t-C₄H₉)(CH₃)Si(OCH₃)₂ and 1.7 g of Al(C₂H₅)₃, so that they were contacted at 30°C for 2 hours. After the contact, the solid product was thoroughly washed with n-heptane to prepare Component (A), which was found, upon analysis of its portion, to contain Ti in 1.9% by weight.

### [Polymerization of Propylene]

The procedure of Example II-1 was repeated.

The results are as shown in Table II-1.

### <Methods for Evaluating Practical Properties>

The practical properties of the polymers obtained in Examples II-5 and II-10 and Comparative Example II-4 were evaluated as follows. The following additives were added to the powdery block copolymers obtained in Examples II-5 and II-10 and Comparative Example II-4, and the mixtures were respectively pelletized by an extruder under the same conditions. The resultants were respectively molded into sheets, each having a thickness of 4 mm, by an injection molding press. The sheets thus obtained were evaluated in terms of the following physical properties.

### Additives:

| | |
|---|---|
| 2,6-tert-butyl phenol | 0.10% by weight |
| "RA 1010" (manufactured by Ciba-Giegy, Ltd.) | 0.05% by weight |
| Calcium stearate | 0.10% by weight |

### Measurement of Physical Properties:

Physical properties were determined in accordance with the following test methods.
(a) Flexural modulus: ASTM-D790
(b) Izod impact strength (0°C): ASTM-D256 (notched)

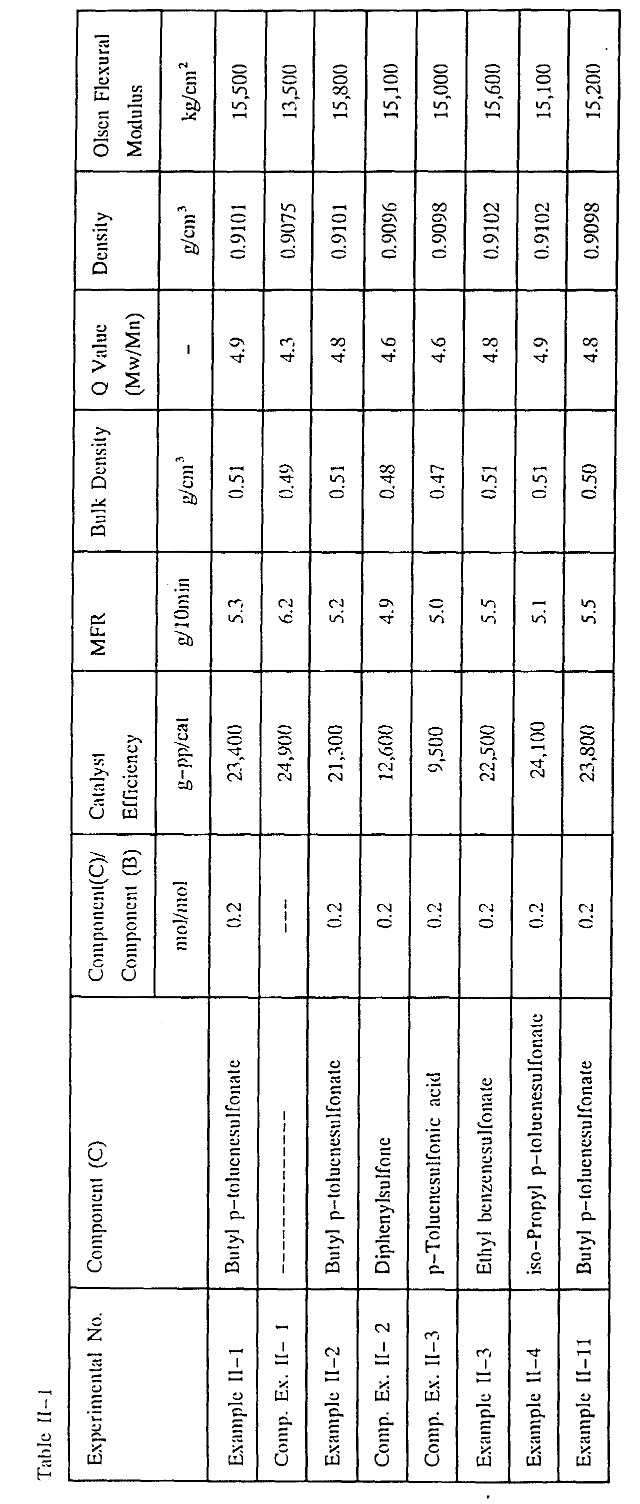

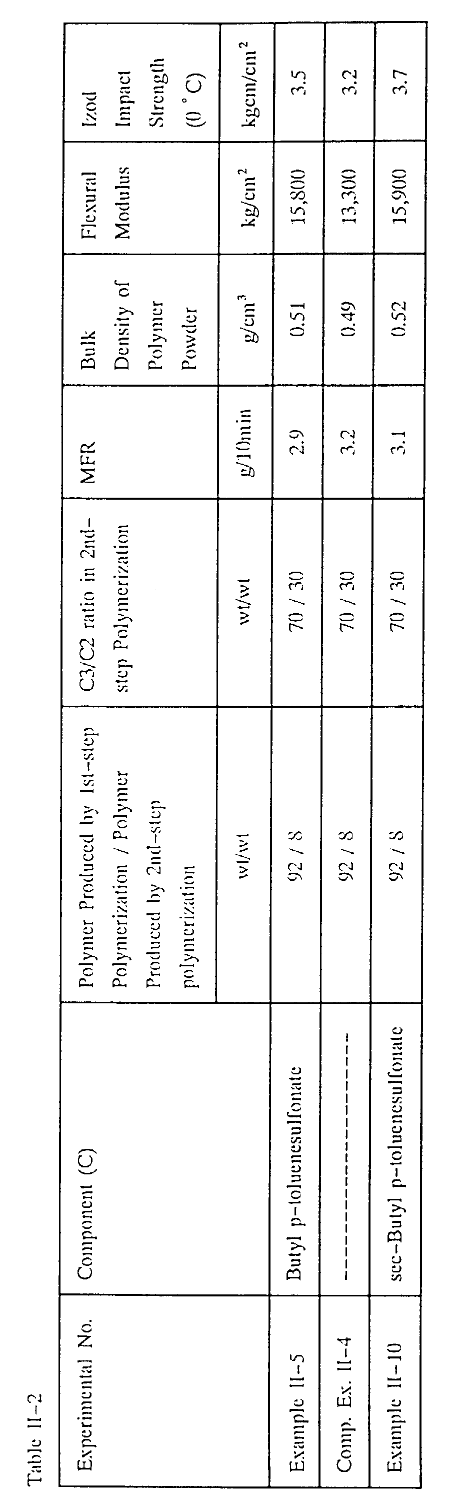

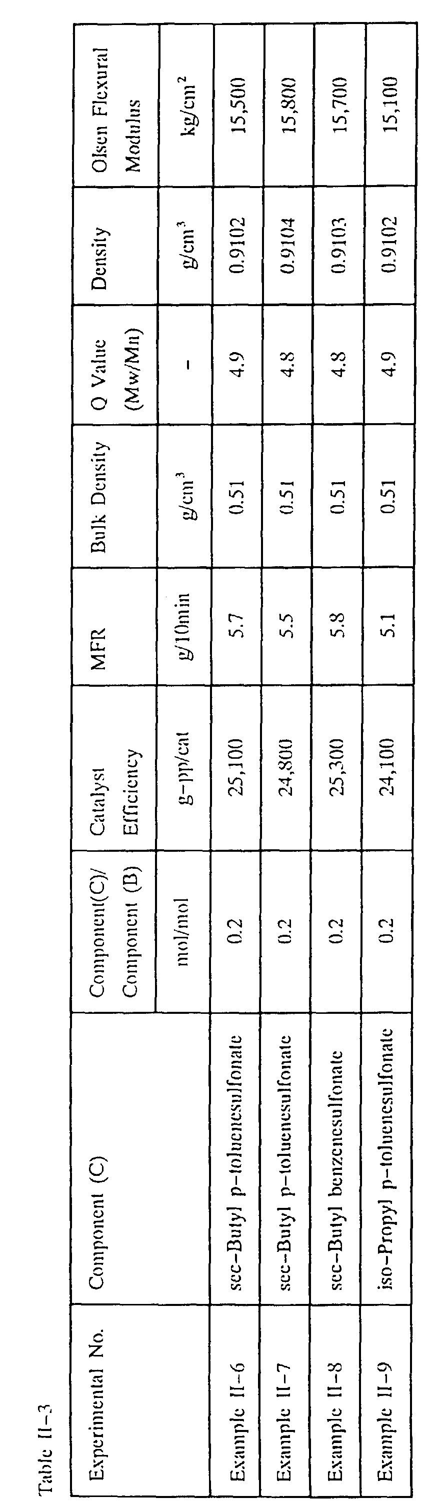

As previously mentioned in "SUMMARY OF THE INVENTION", olefin polymers having excellent moldability and processability and extremely high crystallinity, and catalysts useful for olefin polymerization, with which these polymers can be produced in high yield can be obtained by the present invention.

## Claims

1. A catalyst for olefin polymerization comprising the following components (A), (B), (C) and (D) in combination:
Component (A) which is a solid catalyst component comprising as essential components titanium, magnesium, a halogen and an electron-donating compound;
Component (B) which is an organoaluminum compound;
Component (C) which is a sulfonic ester represented by the formula R⁴SO₃R⁵, in which R⁴ and R⁵ respectively represent a hydrocarbon group, and
Component (D) which is an organosilicon compound.

2. The catalyst for olefin polymerization according to claim 1 wherein R⁵ in the sulfonic ester of the Component (C) is a branched aliphatic or alicyclic hydrocarbon group having 3 to 20 carbon atoms.

3. The catalyst for olefin polymerization according to claims 1 or 2 wherein R⁴ and R⁵ in the sulfonic ester of the Component (C) are an aromatic hydrocarbon group for R⁴ and a branched aliphatic or alicyclic hydrocarbon group for R⁵, respectively.

4. The catalyst for olefin polymerization according to anyone of claims 1 to 3 wherein the electron-donating compound comprised in the Component (A) is an organosilicon compound represented by the formula (I):
R¹R² ₃₋ₙSi(OR³)n (I)
wherein R¹ is a branched or alicyclic hydrocarbon group, R² is a branched, alicyclic or linear hydrocarbon group, R³ is a branched or linear hydrocarbon group, respectively; and n is a number of 2 to 3.

5. The catalyst for olefin polymerization according to claim 4 wherein R¹ is a branched hydrocarbon group having 4 to 10 carbon atoms with an alpha-carbon which is tertiary.

6. The catalyst for olefin polymerization according to claim 5 wherein the electron-donating compound further comprises a compound selected from the group consisting of phthalic esters and phthaloyl chloride.

7. The catalyst for olefin polymerization according to anyone of claims 1 to 6 wherein the amount of the sulfonic ester of the Component (C) used is 0.01 to 1.0 in a mole ratio to the organoaluminium compound of the Component (B).

8. The catalyst for olefin polymerization according to anyone of claims 1 to 7 wherein the amount of the sulfonic ester of the Component (C) is 0.05 to 0.5 in a mole ratio to the organoaluminium compound of the Component (B).

9. The catalyst for olefin polymerization according to anyone of claims 1 to 8 wherein the amount of the organosilicon compound of the Component (D) is 0.01 to 1.0 in a mole ratio to the organoaluminium compound of the Component (B).

10. The catalyst for olefin polymerization according to anyone of claims 1 to 9 wherein the amount of the organosilicon compound of the Component (D) is 0.05 to 0.5 in a mole ratio to the organoaluminium compound of the Component (B).

11. The catalyst for olefin polymerization according to anyone of claims 1 to 10 wherein the olefin polymerized has 3 or more carbon atoms.

12. A process for producing olefin polymers comprising contacting an olefin with the catalyst claimed in anyone of claims 1 to 11 thereby polymerizing the olefin.

13. The process for producing olefin polymers according to claim 12 wherein a polymer of an olefin of 3 or more carbon atoms is produced.

14. A catalyst for olefin polymerization comprising the following components (A), (B) and (C) in combination:
Component (A) which is a solid catalyst component comprising as essential components titanium, magnesium, a halogen and an electron-donating compound, the electron-donating compound being an organosilicon compound represented by the formula (I):
R¹R² ₃₋ₙSi(OR³)ₙ (I)
wherein R¹ is a branched or alicyclic hydrocarbon group, R² is a branched, alicyclic or linear hydrocarbon group, R³ is a branched or linear hydrocarbon group, respectively; and n is a number of 2 to 3;
Component (B) which is an oganoaluminum compound; and
Component (C) which is a sulfonic ester represented by the formula R⁴SO₃R⁵, in which R⁴ and R⁵, respectively, represent a hydrocarbon group.

15. The catalyst for olefin polymerization according to claim 14 wherein the organosilicon compound used as the electron-donating compound has R¹ of a branched hydrocarbon group having 4 to 10 carbon atoms with an alpha-carbon which is tertiary.

16. The catalyst for olefin polymerization according to claim 14 wherein the electron-donating compound comprises an organosilicon compound represented by the formula (I) and a compound selected from the group consisting of phthalic esters and phthaloyl chloride.

17. The catalyst for olefin polymerization according to any one of claims 14 to 16 wherein R⁵ in the sulfonic ester of the Component (C) is a branched aliphatic or alicyclic hydrocarbon group having 3 to 20 carbon atoms.

18. The catalyst for olefin polymerization according to anyone of claims 15 to 17, wherein R⁴ and R⁵ in the sulfonic ester of the Component (C) are an aromatic hydrocarbon group for R⁴ and a branched aliphatic or alicyclic hydrocarbon group for R⁵, respectively.

19. The catalyst for olefin polymerization according to anyone of claims 15 to 18 wherein the amount of the sulfonic ester of the Component (C) used is 0.01 to 1.0 in a mole ratio to the organoaluminium compound of the Component (B).

20. The catalyst for olefin polymerization according to anyone of claims 14 to 19 wherein the amount of the sulfonic ester of the Component (C) is 0.05 to 5.0 in a mole ratio to the organoaluminium compound of the Component (B).

21. The catalyst for olefin polymerization according to anyone of claims 14 to 20 wherein the olefin polymerized has 3 or more carbon atoms.

22. A process for producing olefin polymers comprising contacting an olefin with the catalyst claimed in anyone of claims 14 to 21 thereby polymerizing the olefin.

23. The process for producing olefin polymers according to claim 22 wherein a polymer of an olefin of 3 or more carbon atoms is produced.

## Patentansprüche

1. Katalysator zur Olefin-Polymerisation, der die folgenden Komponenten (A), (B), (C) und (D) in Kombination umfaßt:
Komponente (A), die eine feste Katalysatorkomponente ist, die als essentielle Komponenten Titan, Magnesium, ein Halogen und eine elektronenabgebende Verbindung umfaßt;
Komponente (B), die eine Organoaluminium-Verbindung ist;
Komponente (C), die ein Sulfonsäureester ist, der durch die Formel R⁴SO₃R⁵, in der R⁴ und R⁵ jeweils eine Kohlenwasserstoff-Gruppe darstellen, dargestellt wird; und
Komponente (d), die eine Organosilicium-Verbindung ist.

2. Katalysator zur Olefin-Polymerisation nach Anspruch 1, wobei R⁵ im Sulfonsäureester der Komponente (C) eine verzweigte aliphatische oder alicyclische Kohlenwasserstoff-Gruppe, die 3 bis 20 Kohlenstoffatome hat, ist.

3. Katalysator zur Olefin-Polymerisation nach Anspruch 1 oder 2, wobei R⁴ und R⁵ im Sulfonsäureester der Komponente (C) eine aromatische Kohlenwasserstoff-Gruppe für R⁴ bzw. eine verzweigte aliphatische oder alicyclische Kohlenwasserstoff-Gruppe für R⁵ sind.

4. Verfahren zur Olefinpolymerisation nach einem der Ansprüche 1 bis 3, wobei die elektronenabgebende Verbindung, die in der Komponente (A) enthalten ist, eine Organosilicium-Verbindung ist, die durch die folgende Formel (I) dargestellt wird:
R¹R² ₃₋ₙSi(OR³)ₙ (I)
worin R¹ eine verzweigte oder alicyclische Kohlenwasserstoff-Gruppe ist; R² eine verzweigte, alicyclische oder lineare Kohlenwasserstoff-Gruppe ist, R³ eine verzweigte oder lineare Kohlenwasserstoff-Gruppe ist; und n eine Zahl von 2 bis 3 ist.

5. Katalysator zur Olefin-Polymerisation nach Anspruch 4, wobei R¹ eine verzweigte Kohlenwasserstoff-Gruppe ist, die 4 bis 10 Kohlenstoffatome hat, wobei ein α-Kohlenstoff tertiär ist.

6. Katalysator zur Olefin-Polymerisation nach Anspruch 5, wobei die elektronenabgebende Verbindung außerdem eine Verbindung enthält, die aus der Gruppe bestehend aus Phthalsäureestern und Phthaloylchlorid, ausgewählt ist.

7. Katalysator zur Olefin-Polymerisation nach einem der Ansprüche 1 bis 6, wobei die Menge des Sulfonsäureesters der Komponente (C), die verwendet wird, im Molverhältnis zu der Organoaluminium-Verbindung der Komponente (B) von 0,01 bis 1,0 ist.

8. Katalysator zur Olefin-Polymerisation nach einem der Ansprüche 1 bis 7, wobei die Menge des Sulfonsäureesters der Komponente (C) im Molverhältnis zu der Organoaluminium-Verbindung der Komponente (B) von 0,05 bis 0,5 ist.

9. Katalysator zur Olefin-Polymerisation nach einem der Ansprüche 1 bis 8, wobei die Menge der Organosilicium-Verbindung der Komponente (D) im Molverhältnis zur Organoaluminium-Verbindung der Komponente (B) von 0,01 bis 1,0 ist.

10. Katalysator zur Olefin-Polymerisation nach einem der Ansprüche 1 bis 9, wobei die Menge der Organosilicium-Verbindung der Komponente (D) im Molverhältnis zu der Organoaluminium-Verbindung der Komponente (B) von 0,05 bis 0,5 ist.

11. Katalysator zur Olefin-Polymerisation nach einem der Ansprüche 1 bis 10, wobei das polymerisierte Olefin 3 oder mehr Kohlenstoffatome hat.

12. Verfahren zur Herstellung von Olefin-Polymeren, das ein In-Kontakt-Bringen eines Olefins mit dem Katalysator, der in einem der Ansprüche 1 bis 11 beansprucht ist, und dadurch Polymerisieren des Olefins umfaßt.

13. Verfahren zur Herstellung von Olefin-Polymeren nach Anspruch 12, wobei ein Polymer eines Olefins aus drei oder mehr Kohlenstoffatomen hergestellt wird.

14. Katalysator zur Olefin-Polymerisation, der die folgenden Komponenten (A), (B) und (C) in Kombination enthält:
Komponente (A), die eine feste Katalysatorkomponente ist, die als essentielle Komponenten Titan, Magnesium, ein Halogen und eine elektronenabgebende Verbindung enthält, wobei die elektronenabgebende Verbindung eine Organosilicium-Verbindung ist, die durch die folgende Formel (I) dargestellt wird:
R¹R² ₃₋ₙSi(OR³)ₙ (I)
worin R¹ eine verzweigte oder alicyclische Kohlenwasserstoff-Gruppe ist; R² eine verzweigte, alicyclische oder lineare Kohlenwasserstoff-Gruppe ist, R³ eine verzweigte oder lineare Kohlenwasserstoff-Gruppe ist; und n eine Zahl von 2 bis 3 ist;
Komponente (B), die eine Organoaluminium-Verbindung ist; und
Komponente (C), die ein Sulfonsäureester ist, der durch die Formel R⁴SO₃R⁵ dargestellt wird, in der R⁴ bzw. R⁵ eine Kohlenwasserstoff-Gruppe darstellen.

15. Katalysator zur Olefin-Polymerisation nach Anspruch 14, wobei die Organosilicium-Verbindung, die als elektronenabgebende Verbindung verwendet wird, als R¹ eine verzweigte Kohlenwasserstoff-Gruppe hat, die 4 bis 10 Kohlenstoffatome hat, und in der ein α-Kohlenstoffatom tertiär.

16. Katalysator zur Olefin-Polymerisation nach Anspruch 14, wobei die elektronenabgebende Verbindung eine Organosilicium-Verbindung, die durch die Formel (I) dargestellt wird, und eine Verbindung, die aus der Gruppe bestehend aus Phthalsäureestern und Phthaloylchlorid umfaßt.

17. Katalysator zur Olefin-Polymerisation nach einem der Ansprüche 14 bis 16, wobei R⁵ im Sulfonsäureester der Komponente (C) eine verzweigte aliphatische oder alicyclische Kohlenwasserstoff-Gruppe, die 3 bis 20 Kohlenstoffatome hat, ist.

18. Katalysator zur Olefin-Polymerisation nach einem der Ansprüche 15 bis 17, wobei R⁴ und R⁵ in dem Sulfonsäureester in der Komponente (C) eine aromatische Kohlenwasserstoff-Gruppe für R⁴ bzw. eine verzweigte aliphatische oder alicyclische Kohlenwasserstoff-Gruppe für R⁵ sind.

19. Katalysator zur Olefin-Polymerisation nach einem der Ansprüche 15 bis 18, wobei die Menge des Sulfonsäureesters der Komponente (C), die verwendet wird, im Molverhältnis zu der Organoaluminium-Verbindung der Komponente (B) von 0,01 bis 1,0 ist.

20. Katalysator zur Olefin-Polymerisation nach einem der Ansprüche 14 bis 19, wobei die Menge des Sulfonsäureesters der Komponente (C) im Molverhältnis zu der Organoaluminium-Verbindung der Komponente (B) von 0,05 bis 5,0 ist.

21. Katalysator zur Olefin-Polymerisation nach einem der Ansprüche 14 bis 20, wobei das polymerisierte Olefin 3 oder mehr Kohlenstoffatome hat.

22. Verfahren zur Herstellung von Olefin-Polymeren, das ein In-Kontakt-Bringen eines Olefins mit dem Katalysator, der in einem der Ansprüche 14 bis 21 beansprucht wird, und dadurch Polymerisieren des Olefins umfaßt.

23. Verfahren zur Herstellung von Olefin-Polymeren nach Anspruch 22, wobei ein Polymer aus einem Olefin mit 3 oder mehr Kohlenstoffatomen produziert wird.

## Revendications

1. Catalyseur pour la polymérisation d'oléfines, comprenant les composants (A), (B), (C) et (D) ci-après en combinaison:
un composant (A) qui représente un composant de catalyseur solide comprenant, à titre de composants essentiels, du titane, du magnésium, un atome d'halogène et un composé donneur d'électrons;
un composant (B) qui représente un composé d'organoaluminium;
un composant (C) qui représente un ester sulfonique répondant à la formule R⁴SO₃R⁵ dans laquelle R⁴ et R⁵ représentent respectivement un groupe d'hydrocarbure; et
un composant (D) qui représente un composé d'organosilicium.

2. Catalyseur pour la polymérisation d'oléfines selon la revendication 1, dans lequel R⁵ dans l'ester sulfonique du composant (C) représente un groupe d'hydrocarbure aliphatique ramifié ou alicyclique contenant de 3 à 20 atomes de carbone.

3. Catalyseur pour la polymérisation d'oléfines selon la revendication 1 ou 2, dans lequel R⁴ et R⁵ dans l'ester sulfonique du composant (C) représentent un groupe d'hydrocarbure aromatique pour R⁴ et un groupe d'hydrocarbure aliphatique ramifié ou alicyclique pour R⁵, respectivement.

4. Catalyseur pour la polymérisation d'oléfines selon l'une quelconque des revendications 1 à 3, dans lequel le composé donneur d'électrons compris dans le composant (A) est un composé d'organosilicium répondant à la formule (I):
R¹R² ₃₋ₙSi(OR³)ₙ (I)
dans laquelle R¹ représente un groupe d'hydrocarbure ramifié ou alicyclique, R² représente un groupe d'hydrocarbure ramifié, alicyclique ou linéaire, R³ représente un groupe d'hydrocarbure ramifié ou linéaire, respectivement; et n représente un nombre de 2 à 3.

5. Catalyseur pour la polymérisation d'oléfines selon la revendication 4, dans lequel R¹ représente un groupe d'hydrocarbure ramifié contenant de 4 à 10 atomes de carbone comprenant un atome de carbone alpha de type tertiaire.

6. Catalyseur pour la polymérisation d'oléfines selon la revendication 5, dans lequel le composé donneur d'électrons comprend en outre un composé choisi parmi le groupe constitué par des esters phtaliques et par le chlorure de phtaloyle.

7. Catalyseur pour la polymérisation d'oléfines selon l'une quelconque des revendications 1 à 6, dans lequel la quantité de l'ester sulfonique du composant (C) utilisé s'élève de 0,01 à 1,0 dans un rapport molaire au composé d'organoaluminium du composant (B).

8. Catalyseur pour la polymérisation d'oléfines selon l'une quelconque des revendications 1 à 7, dans lequel la quantité de l'ester sulfonique du composant (C) s'élève de 0,05 à 0,5 dans un rapport molaire au composé d'organoaluminium du composant (B).

9. Catalyseur pour la polymérisation d'oléfines selon l'une quelconque des revendications 1 à 8, dans lequel la quantité du composé d'organosilicium du composant (D) s'élève de 0,01 à 1,0 dans un rapport molaire au composé d'organoaluminium du composant (B).

10. Catalyseur pour la polymérisation d'oléfines selon l'une quelconque des revendications 1 à 9, dans lequel la quantité du composé d'organosilicium du composant (D) s'élève de 0,05 à 0,5 dans un rapport molaire au composé d'organoaluminium du composant (B).

11. Catalyseur pour la polymérisation d'oléfines selon l'une quelconque des revendications 1 à 10, dans lequel l'oléfine à l'état polymérisé contient 3 atomes de carbone ou plus.

12. Procédé pour la préparation de polymères oléfiniques, comprenant la mise en contact d'une oléfine avec le catalyseur revendiqué dans l'une quelconque des revendications 1 à 11 pour ainsi polymériser l'oléfine.

13. Procédé pour préparer des polymères oléfiniques selon la revendication 12, dans lequel on obtient un polymère d'une oléfine contenant 3 atomes de carbone ou plus.

14. Catalyseur pour la polymérisation d'oléfines, comprenant les composants (A), (B) et (C) ci-après en combinaison:
un composant (A) qui représente un composant de catalyseur solide comprenant, à titre de composants essentiels, du titane, du magnésium, un atome d'halogène et un composé donneur d'électrons, le composé donneur d'électrons représentant un composé d'organosilicium répondant à la formule (I):
R¹R² ₃₋ₙSi(OR³)ₙ (I)
dans laquelle R¹ représente un groupe d'hydrocarbure ramifié ou alicyclique, R² représente un groupe d'hydrocarbure ramifié, alicyclique ou linéaire, R³ représente un groupe d'hydrocarbure ramifié ou linéaire, respectivement; et n représente un nombre de 2 à 3;
un composant (B) qui représente un composé d'organoaluminium; et
un composant (C) qui représente un ester sulfonique répondant à la formule R⁴SO₃R⁵ dans laquelle R⁴ et R⁵ respectivement représentent un groupe d'hydrocarbure.

15. Catalyseur pour la polymérisation d'oléfines selon la revendication 14, dans lequel le radical R¹ du composé d'organosilicium utilisé à titre de composé donneur d'électrons représente un groupe d'hydrocarbure ramifié contenant de 4 à 10 atomes de carbone comprenant un atome de carbone alpha de type tertiaire.

16. Catalyseur pour la polymérisation d'oléfines selon la revendication 14, dans lequel le composé donneur d'électrons comprend un composé d'organosilicium répondant à la formule (I) et un composé choisi parmi le groupe constitué par des esters phtaliques et par le chlorure de phtaloyle.

17. Catalyseur pour la polymérisation d'oléfines selon l'une quelconque des revendications 14 à 16, dans lequel R⁵ dans l'ester sulfonique du composant (C) est un groupe d'hydrocarbure aliphatique ramifié ou alicyclique contenant de 3 à 20 atomes de carbone.

18. Catalyseur pour la polymérisation d'oléfines selon l'une quelconque des revendications 15 à 17, dans lequel R⁴ et R⁵ dans l'ester sulfonique du composant (C) représentent un groupe d'hydrocarbure aromatique pour R⁴ et un groupe d'hydrocarbure aliphatique ramifié ou alicyclique pour R⁵, respectivement.

19. Catalyseur pour la polymérisation d'oléfines selon l'une quelconque des revendications 15 à 18, dans lequel la quantité de l'ester sulfonique du composant (C) utilisé s'élève de 0,01 à 1,0 dans un rapport molaire au composé d'organoaluminium du composant (B).

20. Catalyseur pour la polymérisation d'oléfines selon l'une quelconque des revendications 14 à 19, dans lequel la quantité de l'ester sulfonique du composant (C) utilisé s'élève de 0,05 à 5,0 dans un rapport molaire au composé d'organoaluminium du composant (B).

21. Catalyseur pour la polymérisation d'oléfines selon l'une quelconque des revendications 14 à 20, dans lequel l'oléfine à l'état polymérisé contient 3 atomes de carbone ou plus.

22. Procédé pour la préparation de polymères oléfiniques, comprenant la mise en contact d'une oléfine avec le catalyseur revendiqué dans l'une quelconque des revendications 14 à 21 pour ainsi polymériser l'oléfine.

23. Procédé pour la préparation de polymères oléfiniques selon la revendication 22, dans lequel on obtient un polymère d'une oléfine contenant 3 atomes de carbone ou plus.
